# FASCICULE DE BREVET EUROPEEN

(11) **EP 0 831 600 B1**
(45) Date de publication et mention de la délivrance du brevet: **08.11.2000**
(21) Numéro de dépôt: 97402169.3
(22) Date de dépôt: 18.09.1997
(51) Int. Cl.: H04B 7/185, H04N 7/24

(54) **Dispositif d'émission d'informations numériques par satellite**
Vorrichtung zum Übertragen von digitalen Informationen über Satellit
Arrangement for transmitting digital information by satellite

(30) Priorité: 19.09.1996 FR 9611431
(43) Date de publication de la demande: 25.03.1998
(73) Titulaire: Organisation Européenne de Télécommunications par Satellite EUTELSAT, 75015 Paris (FR); Agence Spatiale Européenne, 75015 Paris (FR)
(72) Inventeur: Pham, Huu Nghia, 78210 Saint Cyr L'Ecole (FR); Elia, Carlo, 2343 CL Oegstgeest (NL)
(74) Mandataire: Coester, Jacques Charles

(56) Documents cités:
- EP-A- 0 695 051
- US-A- 4 145 573
- US-A- 4 425 639
- REIMERS U: "CONCEPT OF A EUROPEAN SYSTEM FOR THE TRANSMISSION OF DIGITIZED TELEVISION SIGNALS VIA SATELLITE" SMPTE JOURNAL, vol. 103, no. 11, 1 novembre 1994, US, pages 741-747, XP000475180

## Description

L'invention concerne un dispositif d'émission d'informations numériques par satellite, du type décrit dans le préambule de la revendication 1.

La présente invention est relative aux transmissions numériques d'informations et plus particulièrement aux transmissions par satellites d'émissions de stations terrestres devant ensuite être réémises à destination de récepteurs divers.

L'invention concerne plus partiuclièrement toute transmission numérique par satellite à destination des récepteurs terrestres, principalement des récepteurs domestiques, qui sont conçus pour recevoir un signal conforme à la norme ETS 300 421 (Norme de diffusion de télévision numérique par satellite dans les bandes Ku, dite DVB-S, développée par le groupe DVB, Digital Video Broadcasting).

L'invention trouve son utilité quand il faut acheminer des flux numériques de faibles débits (de l'ordre de 6 Mbits/s ou moins), à partir de plusieurs sources distantes, appartenant à des entités indépendantes, vers un point de multiplexage afin d'y constituer le multiplex final de diffusion conforme à la norme ISO/IEC 13818-1 (Partie système de la norme MPEG2 développée par le groupe MPEG, Moving Picture Expert Group), tout en évitant une architecture entraînant un point de transit terrestre et centralisé. En effet, l'invention s'appuie sur une réalisation qui permet la constitution, à bord d'un satellite, du multiplex final de diffusion contenant les informations des flux élémentaires des sources distantes, ces dernières étant équipées de stations terrestres de petites tailles émettant vers le satellite.

L'invention trouve aussi son utilité dans la simplicité des équipements à terre d'acheminement des flux numériques élémentaires, tout en assurant la compatibilité avec le parc de récepteurs terrestres DVB en cours de déploiement à grande échelle, en particulier le parc des récepteurs domestiques qui, par économie, ne possèdent pas une gamme de débits de réception suffisamment étendue pour leur permettre de recevoir à la fois des signaux de hauts débits (environ 40 Mbit/s) et des signaux de faibles débits (environ 6 Mbit/s ou moins), ni une antenne suffisamment grande pour leur permettre de capter des signaux transmis par satellite séparément, en partage de fréquence dans un même répéteur satellite, à cause du recul en puissance de l'amplificateur à onde progressive nécessaire pour éviter des effets néfastes de non-linéarité.

L'art antérieur a déjà fait connaître des procédés et installations concernant l'objet ci-dessus.

Une réalisation connue est décrite dans US-A-4 145 573 dans laquelle, dans un système de télécommunication numérique par satellite commuté par répartition dans le temps à plusieurs faisceaux, des utilisateurs ayant des besoins de capacités différentes sont servis de manière appropriée par quantification de la capacité de chaque station terrestre et, de manière analogue, du débit de répétition binaire de chaque station terrestre, en puissance entière de deux. Au niveau du satellite, on récupère le flux binaire montant qui est émis par chaque station terrestre et les flux binaires de débit plus élevé sont démultiplexés pour former plusieurs sous-canaux de débits binaires égaux à l'entrée vers le commutateur du satellite, le nombre des sous-canaux formés étant égal à la capacité quantifiée de la station terrestre associée. Après que le commutateur du satellite ait transféré les bits présents aux entrées du commutateur en provenance de toutes les stations terrestres vers les sorties du commutateur approprié, plusieurs sous-canaux de sortie sont multiplexés pour former les signaux de débit binaire plus élevé, le nombre de sous-canaux multiplexés étant égal à la capacité quantifiée de la station terrestre vers laquelle les bits sont dirigés.

Une autre réalisation est également connue par EP-A-0 695 051 qui concerne un système d'émission numérique par satellite comprenant une liaison envoyant des informations numériques à destination du satellite, ledit satellite réémettant un multiplex d'émission. Selon ce document antérieur, la liaison comporte une pluralité d'émetteurs individuels dont chacun émet un signal d'émission à un premier débit correspondant à au moins un programme et le satellite comporte un module multiplexeur embarqué combinant lesdits signaux d'émission pour former le multiplex d'émission à un deuxième débit plus élevé que le premier débit.

Dans la réalisation ci-dessus, l'embrouillage par dispersion d'énergie EDS de la norme de télévision numérique DVB (Digital Video Broadcasting) est effectué à terre, à l'aide d'une modification de l'algorithme d'initialisation de l'embrouilleur. Cette modification permet à plusieurs stations émettant des flux montants d'appliquer à leur tour une sous-séquence binaire pseudo-aléatoire dite PRBS (Pseudo Random Binary Sequence). Le résultat apparaît comme si un PRBS unique était produit pour l'embrouillage du flux de transport total sur la voie descendante, ce qui est conforme à la structure d'encadrement de la norme DVB.

L'information de synchronisation de l'embrouilleur de chaque station d'émission doit être mise à jour avec chaque modification du découpage du débit binaire de la voie descendante telle que celle résultant de l'activation d'une nouvelle station, à partir de la fermeture d'une station existante ou du changement de débit binaire par une station active.

Un protocole de changement de synchronisationn des embrouilleurs doit encore être défini, de préférence sans introduire d'interruption à chaque mise en service.

En outre, un mauvais fonctionnement d'une ou de plusieurs stations montantes dans la production appropriée des octets de synchronisation inversés de la norme MPEG-2 conduit à une perte périodique de l'octet de synchronisation inversé et affaiblit la fonction de synchronisation du désembrouilleur décodeur ou démodulateur de réception intégrés IRD pour tous les autres services dans le multiplex de voie descendante. Etant donné que la synchronisation n'est pas standardisée dans un IRD, il est difficile d'estimer quel impact cela peut produire.

Un dispositif selon le préambule de la revendication 1 est décrit dans le document EP - A - 0 695 051.

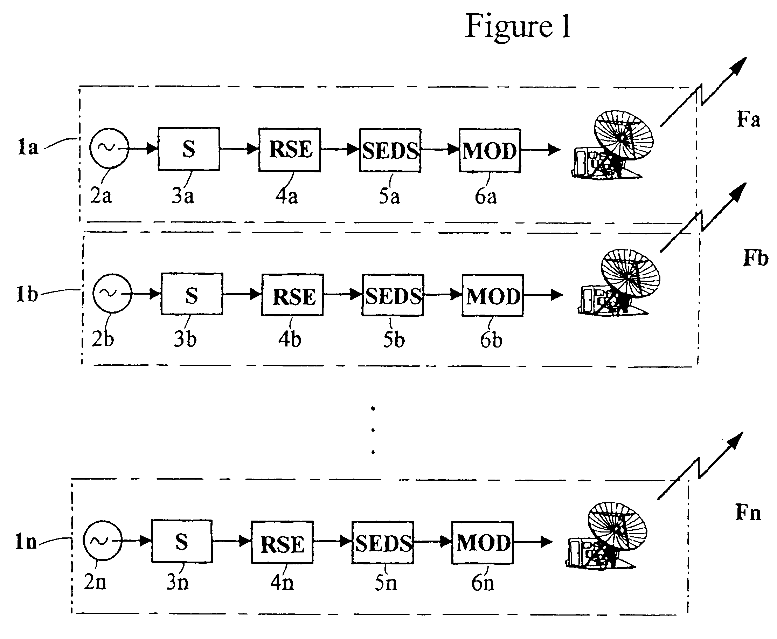

Afin de s'affranchir du mécanisme de synchronisation des trames de l'embrouilleur de dispersion d'énergie (EDS) DVB-S et donc de l'interdépendance entre les stations d'émission terrestres, une amélioration envisageable de la réalisation selon EP - A - 0 695 051 consisterait à prévoir un multiplexeur de paquets MPEG2 non codés Reed-Solomon et à mettre en oeuvre la chaîne intégrale d'émission DVB telle que décrite dans la figure No 1 de la norme ETS 300 421 (DVB-S). Conformément à cette réalisation éventuelle, l'enchaînement des blocs entre la sortie du multiplexeur et le modulateur QPSK embarqués serait : l'EDS, le code de Reed-Solomon (dit code externe), l'entrelaceur convolutif et le codeur convolutif (dit code interne). Cependant, cette réalisation nécessiterait soit le recours à un décodage de Reed-Solomon DVB (204,188,t = 8) à bord du satellite, chose irréalisable dans l'état actuel de la technologie embarquée, soit l'abandon de ce codage externe sur les liaisons montantes, ce qui entraînerait une augmentation de la puissance d'émission des stations terrestres et, par conséquent, leur complexité.

La présente invention résout ce problème en réalisant la fonction d'embrouillage (EDS) à bord du satellite, tout en maintenant la fonction de codage de Reed-Solomon dans les stations d'émission terrestres, sans nécessiter de décodage Reed-Solomon à bord, conformément à la partie caractérisante de la revendication 1.

Du fait des caractéristiques de l'invention, le résultat de l'embrouillage (EDS) du DVB-S est rigoureusement respecté par l'action d'un embrouilleur modifié (MEDS, Modified Energy Dispersal Scrambler), qui se situe dans la chaîne d'émission satellite, à la sortie du module de multiplexage de paquets (DVB), et qui tient compte du fait que ces paquets sont déjà encodés par le code de Reed-Solomon et non des paquets MPEG2 comme dans le schéma d'origine de la norme ETS 300 421 (DVB-S). La sortie de ce MEDS est directement reliée au bloc d'entrelaçage convolutif.

De même, la structure des stations d'émission s'en trouve simplifiée et leur opération est indépendante du nombre des stations actives qui partagent le même multiplex émis par le satellite et de leurs débits respectifs, ce qui est utile dans une exploitation où les caractéristiques des liaisons montantes peuvent changer fréquemment, telle qu'une exploitation en affectation des bandes passantes à la demande, ou encore le partage d'une ou de plusieurs fréquences sur le trajet montant par plusieurs stations en mode AMRT (Accès Multiple à Répartition dans le Temps).

D'autres caractéristiques de l'invention sont indiquées dans les revendications dépendantes.

Aussi, conformément à l'invention, le dispositif d'émission d'informations numériques par satellite à partir de plusieurs stations comprend :
- au moins un ensemble de liaisons envoyant des informations numériques formatées en paquets vers le satellite, sur au moins deux fréquences différentes,
- au moins un second ensemble de liaisons à bord du satellite et recevant lesdits paquets d'informations numériques,
- au moins un module de multiplexage temporel de paquets, relié, d'une part, aux sorties dudit second ensemble de liaisons et, d'autre part, à l'entrée d'un module de formatage des informations numériques,
- ledit module de formatage des informations numériques comprenant un embrouilleur relié à l'entrée d'une partie de chaîne d'émission DVB-S commençant par un bloc d'entrelaçage convolutif,
- au moins une horloge embarquée à bord du satellite, cette horloge fonctionnant en asynchronisme avec toute horloge terrestre et pilotant l'ensemble embarqué qui commence par le module de multiplexage temporel par paquets,
- la partie de chaîne d'émission DVB-S, qui commence par le bloc d'entrelaçage convolutif, se termine par un modulateur QPSK.

Conformément à d'autres caractéristiques de l'invention :
- le signal émis par le satellite par l'intermédiaire du modulateur et qui est un multiplex temporel contenant toutes les informations utiles, individuellement émises vers le satellite par plusieurs stations terrestres, est compatible à des récepteurs conçus pour la réception de signaux DVB-S, et particulièrement aux récepteurs domestiques en cours de déploiement à grande échelle, sans modification de ces derniers ;
- les stations d'émission à terre, envoyant leur flux d'information vers le module de multiplexage, sont exemptes de mécanismes de synchronisation mutuelle d'horloge autre que la dérivation des horloges d'émission à partir de l'horloge extraite du signal multiplex reçu sur le trajet descendant ;
- les stations d'émission à terre comportent une structure se composant d'une source pilotée par une horloge individuelle et reliée à un bloc d'encodage, lui-même éventuellement relié à un bloc embrouilleur dont la sortie est modulée par un modulateur, cette structure permettant auxdites stations d'émission d'activer et de terminer leurs émissions ou de changer de débits parmi les valeurs offertes par l'ensemble de réception embarqué, sans impact sur le service des autres stations, sans recours à un protocole de coordination entre les stations, et donc indépendamment du nombre de stations actives et de leurs débits actuels ;
- les stations d'émission à terre comprennent un bloc d'encodage de Reed-Solomon de la norme DVB, sans effectuer un décodage de Reed-Solomon à bord du satellite, tout en assurant une protection contre les erreurs de transmission sur les trajets montants et en ce qu'on effectue le décodage de Reed-Solomon dans des récepteurs terrestres ;
- l'embrouilleur est un embrouilleur modifié assurant à bord du satellite un embrouillage du DVB-S pour tenir compte du fait que les paquets en sortie du module de multiplexage sont déjà encodés par le codage de Reed-Solomon de la norme DVB ;
- l'embrouilleur modifié applique une opération OU Exclusif entre des paquets de 204 octets en sortie du module de multiplexage et de séquences pseudo-aléatoires également de 204 octets ;
- lesdites séquences pseudo-aléatoires sont les résultats du découpage de la séquence initiale de l'embrouilleur EDS du DVB-S en huit sections dont la première a une longueur de 187 octets et dont les sept autres ont une longueur de 188 octets et par applications d'opérations simples sur ces séquences ;
- les opérations simples sur les séquences consistent en ce qu'on découpe la séquence initiale de l'embrouilleur EDS du DVB-S en huit sections dont la première présente une longueur de 187 octets et dont les sept autres présentent une longueur de 188 octets ; on ajoute en tête de la première séquence un octet 0xFF (255 en décimal) pour en faire une séquence de 188 octets ; on change la valeur du premier octet des sept autres séquences en l'amenant à zéro, et on applique le code Reed-Solomon du DVB aux huit séquences de 188 octets obtenus, en produisant ainsi 8 séquences pseudo-aléatoires.
- les séquences pseudo-aléatoires de l'embrouilleur modifié sont précalculées et stockées dans une mémoire morte.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 illustre la structure des stations d'émission à terre.

La fig. 2 illustre la structure à bord du satellite.

En se référant aux dessins, chaque station d'émission à terre 1a, 1b ... 1n comporte une source S, désignée par 3a, 3b ... 3n, générant des paquets de 188 octets débutant par un octet de synchronisation dont la valeur est fixe et égale à 0 x 47 (47 en hexadécimal) et par trois octets d'entête, suivie de 184 octets de charge utile. Seul le choix des valeurs des trois octets d'entête doit satisfaire à certaines règles afin d'assurer la cohérence du multiplex final selon la norme ISO-IEC 13818-1, les octets de la charge utile pouvant prendre toutes valeurs possibles. L'espace des valeurs des octets d'entête affecté à chaque source peut être assigné de façon statique.

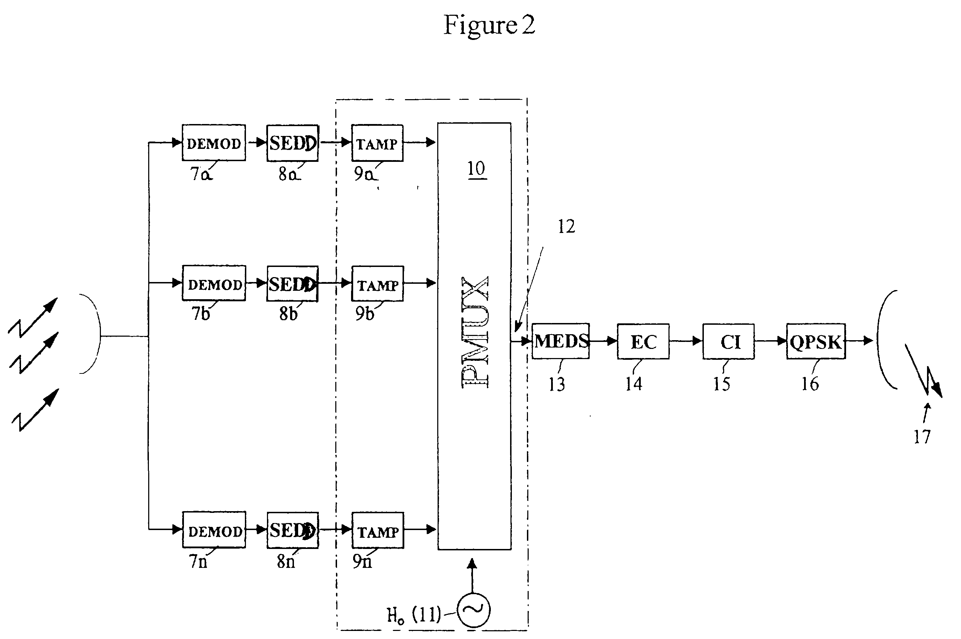

Les diverses sources sont pilotées par des horloges individuelles désignées par 2a, 2b ... 2n, qui ne sont pas nécessairement synchrones et dont le dénominateur commun est l'horloge extraite du signal numérique reçu sur le trajet descendant (point 17, fig. 2).

Les paquets en sortie des sources S sont traités par des blocs RSE d'encodage de Reed-Solomon 4a, 4b ... 4n, ces blocs étant rigoureusement conformes à la norme DVB.

Afin de respecter les réglementations internationales en vigueur dans les bandes Ku concernant les densités de puissance maximales en direction de l'espace, les sorties des blocs RSE d'encodage de Reed-Solomon sont embrouillées par des blocs SEDS formant embrouilleurs de dispersion d'énergie simplifiés, désignés par 5a, 5b ... 5n. Ces blocs ne sont pas nécessairement requis dans d'autres bandes de fréquence.

Le flux binaire résultant des blocs d'embrouillage SEDS est modulé, par exemple en quadriphase (QPSK) ou en toute modulation binaire adéquate, selon les besoins spécifiques soit en conservation de bande passante, soit en conservation d'énergie par des modulateurs MOD désignés par 6a, 6b ... 6n. Les fréquences centrales Fa, Fb ... Fn d'émission des stations sont assignées de façon statique en fonction du banc de démodulateurs embarqués (fig. 2).

A la fig. 2, les sorties des démodulateurs DEMOD, désignés par 7a, 7b ... 7n, adaptés aux modulateurs MOD de la fig. 1, sont reliées respectivement à des blocs SEDD formant des désembrouilleurs de dispersion d'énergie simplifiés 8a, 8b ... 8n.

Selon la disposition décrite dans ce qui précède, les blocs SEDS à terre et les SEDD à bord du satellite sont des blocs identiques, réalisés par application d'une fonction OU Exclusif (XOR) des paquets DVB de 204 octets avec une séquence pseudo-aléatoire dont la longueur est de 203 octets, l'octet de synchronisation MPEG2 du paquet n'étant pas embrouillé. Cette longueur est choisie pour assurer une bonne fiabilité de reconnaissance des mots de synchronisation MPEG2 (0x47) en présence de forts taux d'erreur binaire (BER) pouvant atteindre jusqu'à 10⁻⁵, par exemple. La réalisation de la séquence pseudo-aléatoire des blocs SEDS et SEDD peut être obtenue de diverses manières et n'est pas explicitée ici.

Les blocs SEDD 8a, 8b ... 8n sont reliés à des tampons d'entrée/sortie (TAMP) désignés par 9a, 9b ... 9n de tailles égales au moins à deux paquets DVB, dont les fonctions sont :
- d'annuler les différences entre les horloges d'écriture récupérées par les démodulateurs 7a, 7b ... 7n à partir des signaux en montée, d'une part, et, d'autre part, les horloges de lecture dérivées à partir de l'horloge embarquée Ho désignée par 11 et fonctionnant en asynchronisme avec toute horloge terrestre. L'horloge 11 pilote l'ensemble embarqué qui commence par un multiplexeur PMUX désigné par 10 ;
- d'aligner les paquets issus de la sortie de chacun des blocs SEDD qui ne sont pas nécessairement en phase, au niveau des bits, des octets, et des débuts des paquets, compte tenu de l'absence de synchronisation inter-station.

Le multiplexeur PMUX 10 lit de façon cyclique les tampons TAMP et, si ceux-ci contiennent un paquet complet au moment de la lecture, transfère ce paquet vers la sortie unique à grand débit 12 ; sinon, le multiplexeur 10 insère un paquet spécial dénommé "dummy paquet". Dans cette opération, le multiplexeur 10 est piloté par l'horloge Ho.

Un embrouilleur modifié MEDS désigné par 13 et qui est relié à la sortie du multiplexeur 10 opère sur des blocs de 204 octets en sortie 12 du multiplexeur. L'action de l'embrouilleur consiste à effectuer une opération OU Exclusif (XOR) entre les paquets de 204 octets en sortie du multiplexeur et des séquences pseudo-aléatoires également de 204 octets de longueur.

Ces séquences pseudo-aléatoires sont les résultats du découpage de la séquence initiale de l'embrouilleur EDS du DVB-S en huit sections dont la première a une longueur de 187 octets et dont les sept autres ont une longueur de 188 octets. On ajoute, en tête de la première séquence, l'octet 0xFF (255 en décimal) pour en faire une séquence de 188 octets. On change la valeur du premier octet des sept autres séquences en le mettant à zéro. Finalement, on applique le code Reed-Solomon du DVB aux huit séquences de 188 octets obtenues, en produisant ainsi 8 séquences pseudo-aléatoires.

Le résultat de cette opération étant déterminant, on peut calculer une fois pour toute les séquences du MEDS et les stocker dans une mémoire morte (ROM).

Cette opération d'embrouillage produit un flux de paquets identique à celui obtenu avec le schéma d'origine du DVB-S, dans lequel le codage de Reed-Solomon est appliqué à la sortie de l'embrouilleur DVB-S. Par conséquent, la sortie du MEDS 13 peut être connectée directement au bloc d'entrelaçage convolutif (EC) du schéma DVB, ici désigné par 14. Les blocs de codage interne (CI) et de modulation quadriphase (QPSK), désignés par 15 et 16 respectivement, sont rigoureusement conformes à la spécification DVB-S. Le formatage des informations ainsi réalisé en sortie du bloc de modulation 16 est compatible avec tout récepteur désigné par 17 et prévu pour recevoir un signal conforme à la norme DVB-S.

## Revendications

1. Dispositif d'émission d'informations numériques par satellite à partir de plusieurs stations, du type comprenant :
- au moins un ensemble de liaisons (2a, 3a ... 6a ; 2b, 3b ... 6b ; ... ; 2n, 3n ... 6n) envoyant des informations numériques formatées en paquets vers le satellite, sur au moins deux fréquences différentes (Fa, Fb ... Fn) ,
- au moins un second ensemble de liaisons (7a, 8a, 9a ; 7b, 8b, 9b ; ... ; 7n, 8n, 9n) à bord du satellite et recevant lesdits paquets d'informations numériques,
- à bord du satellite, au moins un module (10) de multiplexage temporel de paquets relié en entrée aux sorties dudit second ensemble de liaision et, en sortie, à l'entrée d'un module de formatage des informations numériques comportant une chaîne d'émission DVB-S commençant par un bloc d'entrelaçage convolutif (14) et se terminant par un modulateur QPSK (16),
- au moins une horloge (11) embarquée à bord du satellite, qui fonctionne en asynchronisme avec toute horloge terrestre et pilotant l'ensemble embarqué qui commence par le module (10) de multiplexage temporel de paquets,
caractérisé en ce que l'ensemble des liaisons envoyant des informations numériques formatées en paquets vers le satellite est dépourvu d'embrouilleurs DVB-S et en ce que le module de formatage des informations numériques précitées comprend un embrouilleur (13) dont l'entrée est reliée à la sortie du module (10) de multiplexage temporel et dont la sortie est reliée à l'entrée du bloc d'entrelaçage convolutif (14).

2. Dispositif selon la revendication 1, caractérisé en ce que le signal émis par le satellite par l'intermédiaire du modulateur (16) et qui est un multiplex temporel contenant toutes les informations utiles, individuellement émises vers le satellite par plusieurs stations terrestres (1a, 1b ... 1n), est compatible à des récepteurs (17) conçus pour la réception de signaux DVB-S, et particulièrement aux récepteurs domestiques.

3. Dispositif selon l'une des revendications 1 ou 2, caractérisé en ce que les stations d'émission à terre, envoyant leur flux d'information vers le module de multiplexage (10), sont exemptes de mécanismes de synchronisation mutuelle d'horloge autre que la dérivation des horloges d'émission à partir de l'horloge extraite du signal multiplex reçu sur le trajet descendant.

4. Dispositif selon l'une des revendications 1 à 3, caractérisé en ce que les stations d'émission à terre (1a, 1b ... 1n) comportent une structure se composant d'une source (3a, 3b
... 3n) pilotée par une horloge individuelle (2a, 2b ... 2n) et reliée à un bloc d'encodage (4a, 4b ..., 4n), lui-même pouvant être relié à un bloc embrouilleur simplifié (5a, 5b ... 5n) dont la sortie est modulée par un modulateur (6a, 6b ... 6n), cette structure permettant auxdites stations d'émission d'activer et de terminer leurs émissions ou de changer de débits parmi les valeurs offertes par l'ensemble de réception embarqué, sans impact sur le service des autres stations, sans recours à un protocole de coordination entre les stations, et donc indépendamment du nombre de stations actives et de leurs débits actuels.

5. Dispositif selon l'une des revendications 1 à 4, caractérisé en ce que les stations d'émission à terre (1a, 1b ... 1n) comprennent un bloc d'encodage de Reed-Solomon (204,188, t=8) de la norme DVB, sans effectuer un décodage de Reed-Solomon à bord du satellite, tout en assurant une protection contre les erreurs de transmission sur les trajets montants et en ce qu'on effectue le décodage de Reed-Solomon dans des récepteurs terrestres.

6. Dispositif selon l'une des revendications 1 à 5, caractérisé en ce que l'embrouilleur (13) est un embrouilleur modifié (13) assurant à bord du satellite un embrouillage (EDS) du DVB-S pour tenir compte du fait que les paquets en sortie du module de multiplexage (10) sont déjà encodés par le codage de Reed-Solomon (204,188,t=8) de la norme DVB.

7. Dispositif selon la revendication 6, caractérisé en ce que l'embrouilleur modifié (13) applique une opération OU Exclusif (XOR) entre des paquets de 204 octets en sortie du module de multiplexage (10) et de séquences pseudo-aléatoires également de 204 octets.

8. Dispositif selon la revendication 7, caractérisé en ce que lesdites séquences pseudo-aléatoires sont les résultats du découpage de la séquence initiale de l'embrouilleur EDS du DVB-S en huit sections dont la première a une longueur de 187 octets et dont les sept autres ont une longueur de 188 octets et d'opérations sur ces séquences consistant en ce qu'on découpe la séquence initiale de l'embrouilleur EDS du DVB-S en huit sections dont la première présente une longueur de 187 octets et dont les sept autres présentent une longueur de 188 octets ; on ajoute en tête de la première séquence un octet OxFF (255 en décimal) pour en faire une séquence de 188 octets ; on change la valeur du premier octet des sept autres séquences en l'amenant à zéro, et on applique le code Reed-Solomon du DVB aux huit séquences de 188 octets obtenus, en produisant ainsi 8 séquences pseudo-aléatoires.

9. Dispositif selon la revendication 7, caractérisé en ce que les séquences pseudo-aléatoires de l'embrouilleur modifié (13) sont précalculées et stockées dans une mémoire morte (ROM).

10. Dispositif selon la revendication 4, caractérisé en ce que l'embrouilleur simplifié est un embrouilleur appliquant une fonction OU Exclusif (XOR) des paquets DVB de 204 octets avec une séquence pseudo-aléatoire dont la longueur est de 203 octets, l'octet de synchronisation MPEG 2 du paquet n'étant pas embrouillé.

## Patentansprüche

1. Vorrichtung zum Übertragen von digitalen Informationen über Satellit von mehreren Stationen umfassend
- mindestens eine Gruppe von Verbindungen (2a, 3a, ... 6a; 2b, 3b ... 6b; ...; 2n, 3n ... 6n), die auf mindestens zwei unterschiedlichen Frequenzen (Fa, Fb ...Fn) als Pakete formatierte digitale Informationen zu dem Satelliten sendet,
- mindestens eine zweite Gruppe von Verbindungen (7a, 8a, 9a; 7b, 8b, 9b; ...; 7n, 8n, 9n) an Bord des Satelliten, der die genannten Pakete digitaler Informationen empfängt,
- an Bord des Satelliten mindestens ein Modul zum Zeitmultiplexen der Pakete, das eingangsseitig mit den Ausgängen der besagten zweiten Gruppe von Verbindungen und ausgangsseitig mit dem Eingang eines Moduls für die Formatierung der digitalen Informationen verbunden ist, das eine DVB'-S-Übertragungskette enthält, die mit einem Faltungs- und Verschachtelungsblock (14) beginnt und mit einem QPSK-Modulator (16) endet,
- mindestens einen Taktgeber (11) an Bord des Satelliten, der ansynchron zu jedem terristrischen Taktgeber läuft und die gesamte Anlage an Bord des Satelliten steuert, die mit dem zum Zeitmultiplexen der Pakete dienenden Modul (10) beginnt,
dadurch gekennzeichnet, daß die Gruppe von Verbindungen, die die als Pakete formatierten digitalen Informationen zum Satelliten überträgt, keinen DVB-S-Scrambler (Verschlüsseler) aufweist,
und daß das Modul für die Formatierung der oben genannten digitalen Informationen einen Scrambler (13) umfaßt, dessen Eingang mit dem Ausgang des Moduls (10) zum Zeitmultiplexen und dessen Ausgang mit den Eingang des Faltungs- und Verschachtelungsblocks (14) verbunden ist.

2. Vorrichtung nach Anspruch 1, dadurch gekennzeichnet, daß das vom Satelliten über den Modulator (16), der zum Zeitmultiplexen dient und alle Nutzinformationen enthält, die von mehreren terrestrischen Stationen (1a, 1b ... 1n) einzeln zu dem Satelliten gesandt werden, übertragene Signal mit Empfängern (17) und insbesondere mit Empfängern in Haushalten kompatibel ist, die für den Empfang von DVB-S-Signalen konzipiert sind.

3. Vorrichtung nach einem der Ansprüche 1 oder 2, dadurch gekennzeichnet, daß die Übertragungsstationen auf der Erde, die ihren Informationsfluß zu dem Multiplexmodul (10) senden, keine Mechanismen zur gegenseitigen Taktsynchronisierung haben, außer der Ableitung der Übertragungstakte von dem Takt, der aus dem Multiplexsignal entnommen wird, das auf dem Weg nach unten empfangen wird.

4. Vorrichtung nach einem der Ansprüche 1 bis 3, dadurch gekennzeichnet, daß die Übertragungsstationen auf der Erde (1a, 1b ...1n) eine Struktur haben, die aus einer Signalquelle (3a, 3b ... 3n) besteht, die von einem individuellen Taktgeber (2a, 2b ...2n) gesteuert wird und mit einem Kodierblock (4a, 4b ...4n) verbunden ist, der seinerseits mit einem vereinfachten Scramblerblock (5a, 5b ... 5n) verbunden sein kann, dessen Ausgang mit einem Modulator (6a, 6b ...6n) moduliert wird, wobei diese Struktur es den genannten Übertragungsstationen ermöglicht, ihre Übertragungen zu aktivieren und zu beenden oder den Durchsatz auf einen der von der gesamten an Bord des Satelliten befindlichen Empfangsanlage angebotenen Werte zu ändern, ohne Beeinträchtigung des Betriebs der anderen Stationen und ohne Zuhilfenahme eines Kodierungsprotokolls zwischen den Stationen und folglich unabhängig von der Anzahl der aktiven Stationen und ihres jeweiligen Durchsatzes.

5. Vorrichtung nach einem der Ansprüche 1 bis 4, dadurch gekennzeichnet, daß die Übertragungsstationen auf der Erde (1a, 1b ... 1n) einen Reed-Solomon Kodierblock (204, 188, t=8) gemäß DVB-Norm umfassen, ohne eine Dekodierung nach Reed-Solomon an Bord des Satelliten durchzuführen, wobei ein Schutz gegen Übertragungsfehler auf den Wegen nach oben gewährleistet wird, und bei der die Reed-Solomon-Dekodierung in den terrestrischen Empfängern durchgeführt wird.

6. Vorrichtung nach einem der Ansprüche 1 bis 5, dadurch gekennzeichnet, daß der Scrambler (13) ein modifizierter Scrambler (13) ist, der an Bord des Satelliten ein Scrambeln (EDS) des DVB-S gewährleistet, um zu berücksichtigen, daß die Pakete am Ausgang des Multiplexmoduls (10) bereits durch Reed-Solomon-Kodierung (204, 188, t=8) gemäß der Norm DVB kondiert sind.

7. Vorrichtung nach Anspruch 6, dadurch gekennzeichnet, daß der eingesetzte modifizierte Scrambler (13) eine exklusive / ausschließlich ODER-Operation (XOR) zwischen den Paketen von 204 Byte am Ausgang des Multiplexmoduls (10) und pseudo-zufälligen Zeichenfolgen von ebenfalls 204 Byte durchführt.

8. Vorrichtung nach Anspruch 7, dadurch gekennzeichnet, daß die besagten pseudo-zufälligen Zeichenfolgen das Ergebnis beim Aufteilen der ursprünglichen Zeichenfolgen des EDS-Scramblers des DVB-S in acht Abschnitte ist, von denen der erste eine Länge von 187 Byte und die sieben anderen eine Länge von 188 Byte haben, und daß Operationen für diese Zeichenfolgen durchgeführt werden, wobei diese Operationen darin bestehen, daß die ursprünglichen Zeichenfolgen des EDS-Scrambler des DVD-S in acht Abschnitte aufgeteilt werden, von denen der erste eine Länge von 187 Byte und die sieben anderen eine Länge von 188 Byte haben, und daß an den Anfang der ersten Zeichenfolgen OxFF Byte hinzugefügt werden (255 der dezimalen Schreibweise), um daraus eine Zeichenfolge von 188 Byte zu bilden, und daß der Wert des ersten Byte der sieben anderen Zeichenfolgen geändert wird, in dem er auf Null gesetzt wird, und daß der REED-Solomon-Kode des DVB auf die acht Zeichenfolgen von 188 erhaltenen Byte angewandt wird, wobei auf diese Weise acht pseudo-zufällige Zeichenfolgen erzeugt werden.

9. Vorrichtung nach Anspruch 7, dadurch gekennzeichnet, daß die besagten pseudo-zufälligen Zeichenfolgen des modifizierten Scramblers (13) vorausberechnet und in einem Festspeicher (ROM) gespeichert sind.

10. Vorrichtung nach Anspruch 4, dadurch gekennzeichnet, daß der vereinfachte Scrambler ein Scrambler ist, der eine exklusive ODER-Funktion (XOR) der DVB-Pakete von 204 Byte mit einer pseudo-zufälligen Zeichenfolge durchführt, deren Länge 203 Byte beträgt, wobei das MPEG 2-Sychronisierungs-Byte des Pakets nicht verschlüsselt ist.

## Claims

1. Device for transmitting digital information by satellite from a plurality of stations of the type comprising :
- at least one set of links (2a, 3a, ..., 6a ; 2b, 3b, ..., 6b ; ... ; 2n, 3n, ..., 6n) that send packet formatted digital information to the satellite, on at least two different frequencies (Fa, Fb, ... Fn);
- at least one second set of links (7a, 8a, 9a ; 7b, 8b, 9b; ... ; 7n, 8n, 9n) on board the satellite and receiving said digital information packets ;
- on board the satellite, at least one packet time multiplexing module (10) connected as input to the outputs of said second set of links and, as output, to the input of a digital information formatting module comprising a transmitting DVB-S chain beginning by a convolutive interleaving block (14) and terminating by a QPSK modulator (16);
- at least one clock (11) on board the satellite, which works in asynchronism with all earth clocks and drives the satellite-borne assembly which begins by the packet time multiplexing module (10);
characterized in that the set of links that send packet formatted digital information to the satellite has no DVB-S scrambler means and in that the formatting module of said digital information comprises a scrambler (13) the input of which is connected to the output of the time multiplexing module (10) and the output of which is connected to the input of the convolutive interleaving block (14).

2. Device according to claim 1, characterized in that the signal transmitted by the satellite by means or the modulator (16) and which is a time multiplex that contains all the useful information, individually transmitted to the satellite by a plurality of earth stations (1a, 1b, ..., 1n), is compatible with receivers (17) designed for receiving DVB-S signals and in particular with home receivers.

3. Device according to one of claims 1 or 2, characterized in that the earth transmitting stations, sending their information flow to the multiplexing module (10), are free of clock mutual synchronization mechanisms other than the derivation of the transmitting clocks from the clock extracted from the multiplex signal received on the going-down path.

4. Device according to one of claims 1 to 3, characterized in that the earth transmitting stations (1a, 1b, ..., 1n) comprise a structure including a source (3a, 3b, ..., 3n) driven by an individual clock (2a, 2b, ..., 2n) and connected to an encoding block (4a, 4b, ..., 4n), itself able to the connected to a simplified scrambling block (5a, 5b, ..., 5n), the output of which is modulated by a modulator (6a, 6b, ..., 6n), this structure enabling said transmitting stations to activate and terminate their transmissions or to change of flow rates among values that are offered by the satellite-borne receiving unit, without any impact on the service of the other stations and without having recourse to a coordinating protocol between the stations, and therefore independently of the number of active stations and of their current flow rates.

5. Device according to one of claims 1 to 4, characterized in that the earth transmitting stations (1a, 1b, ..., 1n) comprise a Reed Solomon encoding block (204, 188, t=8) of the DVB standard, without making a Reed Solomon decoding on board the satellite, while ensuring a protection against transmission errors on the going-up paths, and in that the Reed Solomon decoding is made in earth receivers.

6. Device according to one of claims 1 to 5, characterized in that the scrambler (13) is a modified scrambler (13) ensuring on board the satellite a scrambling (EDS) of the DVB-S for taking into account that the packets outputting from the multiplexing module (10) are already encoded by the Reed Solomon coding (204, 188, t=8) of the DVB standard.

7. Device according to claim 6, characterized in that the modified scrambler (13) applies an exclusive-OR operation (XOR) between packets of 204 bytes outputting from the multiplexing module (10) and pseudo-random sequences also of 204 bytes.

8. Device according to claim 7, characterized in that said pseudo-random sequences result from the cutting of the initial sequence of the EDS scrambler of the DVB-S into eight sections, the first one of which has a length of 187 bytes and the seven other ones of which have a length of 188 bytes, and from operations on these sequences consisting in cutting the initial sequence in the EDS scrambler of the DVB-S into eight sections, the first one of which has a length of 187 bytes and the seven other ones of which have a length of 188 bytes ; adding as header to the first sequence a byte OxFF (255 in decimal) for making a sequence of 188 bytes ; changing the value of the first byte of the seven other sequences by bringing it to zero, and applying the Reed Solomon code of the DVB to the eight sequences of 188 bytes thus obtained, thereby producing 8 pseudo-random sequences.

9. Device according to claim 7, characterized in that the pseudo-random sequences of the modified scrambler (13) are pre-calculated and stored in a read only memory (ROM).

10. Device according to claim 4, characterized in that the simplified scrambler is a scrambler that applies an exclusive-OR function (XOR) of the DVB packets of 204 bytes with a pseudo-random sequence the length of which is of 203 bytes, the MPEG 2 synchronization byte of the packet being not scrambled.
